Europäisches Patentamt

European Patent Office

Office européen des brevets

(11) Veröffentlichungsnummer: **0 336 293**

**A1**

## (12) EUROPÄISCHE PATENTANMELDUNG

(21) Anmeldenummer: 89105604.6

(22) Anmeldetag: 30.03.89

(51) Int. Cl.⁴: **H02G 5/04 , H01R 25/14**

(30) Priorität: 06.04.88 DE 3811457

(43) Veröffentlichungstag der Anmeldung:
11.10.89 Patentblatt 89/41

(84) Benannte Vertragsstaaten:
**AT BE CH DE ES FR GB GR IT LI LU NL SE**

(71) Anmelder: **Rittal-Werk Rudolf Loh GmbH & Co. KG**
**Auf dem Stützelberg**
**D-6348 Herborn(DE)**

(72) Erfinder: **Wagener, Hans**
**Rittershäuser Strasse 14**
**D-6344 Dietzhölztal-Rittershausen(DE)**

(74) Vertreter: **Vogel, Georg**
**Pat.-Ing. Georg Vogel**
**Hermann-Essig-Strasse 35**
**D-7141 Schwieberdingen(DE)**

(54) **Sammelschienensystem mit Haltern und Strom-Sammelschienen-Abschnitten.**

(57) Die Erfindung betrifft ein Sammelschienensystem mit Haltern, die in ihrer Oberseite mehrere Aufnahmen für im Abstand und parallel zueinander verlaufende Strom-Sammelschienen-Abschnitte aufweisen, die in diesen Aufnahmen festgelegt sind. Eine leichte Erweiterung des Sammelschienens-ysems mit vorgefertigten Einheiten läßt sich bei voll-ständiger Abdeckung der Strom-Sammelschienen-Abschnitt zur Befestigungsfläche hin dadurch errei-chen, daß die Halter als rechteckförmige Trägerplatten ausgebildet sind, die mit ihren Längsseiten parallel zu den Strom-Sammelschienen-Abschnitten ausgerichtet sind, daß die Strom-Sammelschienen-Abschnitte bündig mit den Schmalseiten der Trägerplatte abschließen, daß an den Schmalseiten der Trägerplatte die zugekehrten Endabschnitten der Aufnahmen und/oder die Strom-Sammelschienen-Abschnitte in Längsrichtung der Strom-Sammel-schienenAbschnitte ausgerichtete Verbinderelemente zur Hälfte aufnehmen, und daß diese Verbinderelemente bei der Aneinanderreihung der Halter mit den aufeinanderstoßenden Enden der Strom-Sammelschienen-Abschnitte elektrisch leitend ver-bindbar sind.

FIG 1

## Sammelschienensystem mit Haltern und Strom-Sammelschienen-Abschnitten

Die Erfindung betrifft ein Sammelschienensystem mit Haltern, die in ihrer Oberseite mehrere Aufnahmen für im Abstand und parallel zueinander verlaufende Strom-Sammelschienen-Abschnitte aufweisen, die in diesen Aufnahmen festgelegt sind.

Ein Halter für ein derartiges Sammelschienensystem ist durch die DE-PS 31 43 518 bekannt. Dabei sind die Halter quaderförmig und schmal, erstrecken sich nur über einen Teil der Länge der Strom-Sammelschienen-Abschnitte und decken diese ab. Dies hat zur Folge, daß im Bereich der Halter keine elektrischen Geräte mit den Strom-Sammelschienen-Abschnitten verbunden werden können. Außerdem ist das Aneinanderreihen von Strom-Sammelschienen-Abschnitten zur Erweiterung des Sammelschienensystems nicht so möglich, daß auch im Bereich der Stoßstellen der Strom-Sammelschienen-Abschnitte elektrische Geräte mit den Strom-Sammelschienen-Abschnitten verbunden werden können. Die Strom-Sammelschienen-Abschnitte liegen zwischen den Haltern vollständig frei, was die Gefahr von Kurzschlüssen in Sammelschienensystemen mit den verdrahteten elektrischen Geräten erhöht.

Es ist Aufgabe der Erfindung, ein Sammelschienensystem der eingangs erwähnten Art so auszubilden, daß es bei vollständiger Abdeckung der Strom-Sammelschienen-Abschnitte zur Befestigungsfläche hin leicht erweitert werden kann.

Diese Aufgabe wird nach der Erfindung dadurch gelöst, daß die Halter als rechteckförmige Trägerplatten ausgebildet sind, die mit ihren Längsseiten parallel zu den Strom-Sammelschienen-Abschnitten ausgerichtet sind, daß die Strom-Sammelschienen-Abschnitte bündig mit den Schmalseiten der Trägerplatte abschließen, daß an den Schmalseiten der Trägerplatte die zugekehrten Endabschnitte der Aufnahmen und/oder die Strom-Sammelschienen-Abschnitte in Längsrichtung der Strom-Sammelschienen-Abschnitte ausgerichtete Verbinderelemente zur Hälfte aufnehmen, und daß diese Verbinderelemente bei der Aneinanderreihung der Halter mit den aufeinanderstoßenden Enden der Strom-Sammelschienen-Abschnitte elektrisch leitend verbindbar sind.

Die plattenförmigen Halter mit den in den Aufnahmen derselben festgelegten Strom-Sammelschienen-Abschnitten bilden Einheiten, die mit einfachen Verbinderelementen aneinandergereiht werden können, wobei die Verbinderelemente die elektrische Durchschaltung der Strom-Sammelschienen-Abschnitte über die Einheiten hinweg übernehmen und die Trägerplatten die vollständige Isolierung und Abdeckung der Strom-Sammelschienen-Abschnitte zur Befestigungsfläche hin ausführen, so daß die Gefahr von Kurzschlüssen zwischen den Strom-Sammelschienen-Abschnitten sehr stark reduziert ist.

Ist vorgesehen, daß die Aufnahmen für die Strom-Sammelschienen-Abschnitte nutförmig ausgebildet sind und daß in den Endabschnitten der Aufnahmen in den Nutgrund Erweiterungen für die Verbinderelemente eingebracht sind, dann nehmen die aufeinanderstoßenden Trägerplatten die Verbinderelemente so auf, daß sie nicht einsehbar sind. Dabei ist für eine fugenlose Aneinanderreihung von Haltern vorgesehen, daß die Erweiterungen in der Breite, Tiefe und Höhe auf die Breite, die halbe Länge und die Dicke der plattenförmig ausgebildeten Verbinderelemente abgestimmt sind.

Die elektrische Durchschaltung der aufeinanderstoßenden Strom-Sammelschienen-Abschnitte wird in einfacher Weise dadurch erreicht, daß die Strom-Sammelschienen-Abschnitte über den Erweiterungen mit einer Befestigungsaufnahme für eine Befestigungsschraube versehen sind und daß diese Befestigungsschrauben in Gewindeaufnahmen der Verbinderelemente einschraubbar sind.

Für die Festlegung der Strom-Sammelschienen-Abschnitte in den Aufnahmen der Trägerplatte ist nach einer Ausgestaltung vorgesehen, daß die Strom-Sammelschienen-Abschnitte mit einem Befestigungsschenkel in die Aufnahmen der Trägerplatte eingeführt und mittels Schrauben mit dieser verbunden sind, wobei die Schrauben in Längsrichtung der Strom-Sammelschienen-Abschnitte in gleichmäßigen Abständen zueinander angeordnet und quer zu den Strom-Sammelschienen-Abschnitten aufeinander ausgerichtet sind. Die Verbinderelemente bestehen dabei aus elektrisch leitendem Material. Dabei ist für einen kleinen Kontaktübergangswiderstand vorgesehen, daß die Breite der Erweiterungen der Breite der Befestigungsschenkel der Strom-Sammelschienen-Abschnitte und der Verbinderelemente entspricht.

Aus Isolationsgründen kann nach einer weiteren Ausgestaltung auch vorgesehen sein, daß die Verbinderelemente aus einem Isolierträger und einer Kontaktplatte zusammengesetzt sind, wobei die Gewindeaufnahmen in die Isolierträger eingebracht und die Kontaktplatten mit fluchtenden Durchgangsbohrungen versehen sind. Dabei decken die Isolierträger die parallel zu den Strom-Sammelschienen-Abschnitte verlaufenden Seitenwände der Kontaktplatten ab. Die Kontaktplatten legen sich an die Unterseiten der Strom-Sammelschienen-Abschnitte an.

Die elektrische Durchschaltung der aufeinanderstoßenden Strom-Sammelschienen-Abschnitte aneinandergereihter Halter kann nach einer weiteren Ausgestaltung auch so ausgeführt sein, daß die Verbinderelemente über den Befestigungsschenkeln der Strom-Sammelschienen-Abschnitte angeordnet und mit den Befestigungsschenkeln elektrisch leitend verbindbar sind. Dabei ist die Verschraubung so gelöst, daß die Befestigungsschenkel in den Endabschnitten der Aufnahmen mit Befestigungsaufnahmen für eine Befestigungsschraube versehen sind und daß die Befestigungsschrauben in Durchgangsbohrungen der Verbinderelemente und in die Befestigungsaufnahmen der Befestigungsschenkel der Strom-Sammelschienen-Abschnitte eingeführt und mit Gewindeaufnahmen der Trägerplatte des Halters verschraubbar sind.

Damit elektrische Geräte, wie sie aus der DE-PS 36 42 517 und der DE-PS 36 42 518 bekannt sind, über die gesamte Länge der miteinander verbundenen Strom-Sammelschienen-Abschnitte aneinandergereihter Halter an die Strom-Sammelschienen-Abschnitte angeschlossen werden können, ist die Ausgestaltung vorzugsweise so, daß die Strom-Sammelschienen-Abschnitte Z-förmig ausgebildet sind, wobei ein Querschenkel als Befestigungsschenkel dient und der andere Querschenkel als Klemmschenkel im Abstand und parallel zur Oberseite der Trägerplatte verläuft.

Einen Schutz der zu den auf den Strom-Sammelschienen-Abschnitten befestigten elektrischen Geräten geführten Anschluß- und Verbindungsleitungen erreicht man nach einer weiteren Ausgestaltung dadurch, daß die Trägerplatte zumindest zwischen benachbarten Strom-Sammelschienen-Abschnitten mit Reihen von Durchbrüchen versehen sind, die in Kabelkanäle einmünden, die als Aussparungen in die Unterseite eingebracht sind und die die quer zu den Strom-Sammelschienen-Abschnitten ausgerichteten Durchbrüche untereinander und mit den Längsseiten der Trägerplatte verbinden.

Die Erfindung wird anhand eines in den Zeichnungen dargestellten Ausführungsbeispiels näher erläutert. Es zeigt:

Fig. 1 in Draufsicht einen Halter mit eingesetzten Strom-Sammelschienen-Abschnitten,

Fig. 2 einen Querschnitt durch den Halter entlang der Linie II-II der Fig. 1,

Fig. 3 eine vergrößerte Teildraufsicht, der die elektrische Durchschaltung der Strom-Sammelschienen-Abschnitte aneinanderzureihender Halter mittels eines zweiteiligen Verbinderelementes zu entnehmen ist, und

Fig. 4 einen vergrößerten Teilschnitt, dem die elektrische Durchschaltung der Strom-Sammelschienen-Abschnitte aneinanderzureihender Halter mittels eines einteiligen Verbinderelementes zu entnehmen ist.

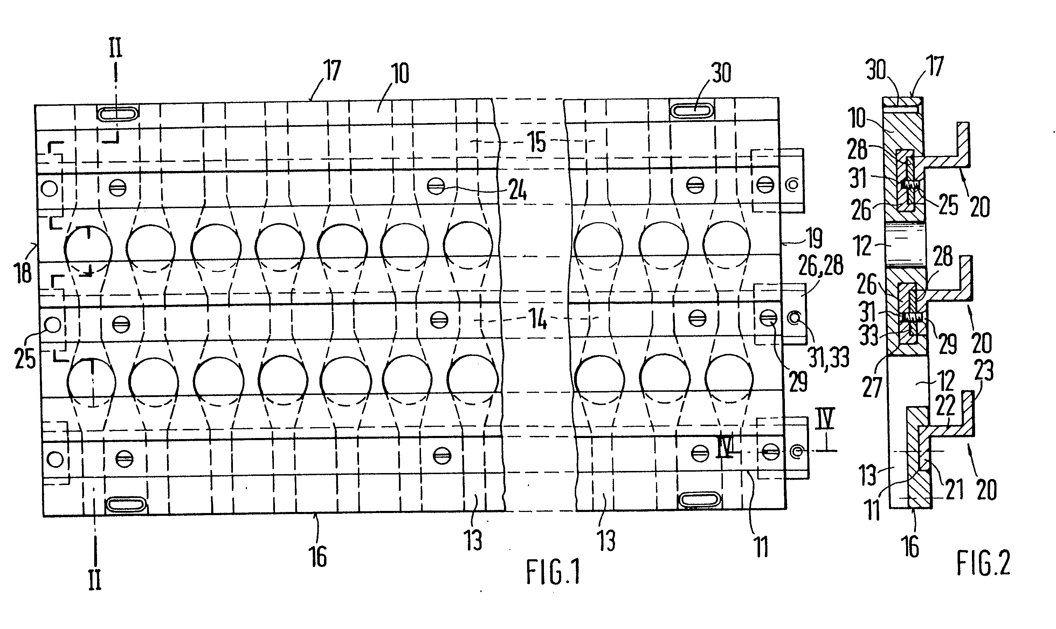

Wie das Ausführungsbeispiel nach Fig. 1 und 2 zeigt, ist der Halter als rechteckförmige Trägerplatte 10 aus Isoliermaterial ausgebildet und trägt in der Oberseite drei längsgerichtete nutförmige Aufnahmen 11, die quer zu den darin eingesetzten Strom-Sammelschienen-Abschnitten 20 in gleichmäßigen Abständen zueinander angeordnet sind.

Die Strom-Sammelschienen-Abschnitte 20 sind im Querschnitt Z-förmig, wobei der eine Querschenkel als Befestigungsschenkel 21 bündig in die Aufnahme 11 eingesetzt und mittels der Schrauben 24 darin festgelegt ist. Die Schrauben 24 sind in Längsrichtung der Strom-Sammelschienen-Abschnitte 20 ebenfalls in gleichmäßigen Abständen angeordnet und quer dazu aufeinander ausgerichtet. Die Mittelschenkel der Strom-Sammelschienen-Abschnitte 20 dienen als Abstandsschenkel 22, die die anderen Querschenkel der Strom-Sammelschienen-Abschnitte 20 als Klemmschenkel 23 zum Festlegen der elektrischen Geräte in vorgegebenem Abstand und parallel zur Oberseite der Trägerplatte 10 halten. Die Strom-Sammelschienen-Abschnitte 20 erstrecken sich über die gesamte Länge der Trägerplatte 10, verlaufen parallel zu deren Längsseiten 16 und 17 und schließen bündig mit den Schmalseiten 18 und 19 der Trägerplatte 10 ab, die senkrecht zu den Strom-Sammelschienen-Abschnitten 20 verlaufen. Die Trägerplatte 10 isoliert und deckt die Strom-Sammelschienen-Abschnitte 20 vollständig zur Befestigungsfläche hin ab. In die Unterseite der Trägerplatte 10 sind quer verlaufende Aussparungen 13, 14 und 15 eingebracht, die sich über einen Teil der Dicke der Trägerplatte 10 erstrecken. Zwischen benachbarten Strom-Sammelschienen-Abschnitte 20 sind Reihen von als Bohrungen ausgebildete Durchbrüche 12 in die Trägerplatte 10 eingebracht. Die Durchbrüche 12 sind in Längsrichtung der Strom-Sammelschienen-Abschnitte 20 in gleichmäßigen Abständen angeordnet und in den Reihen sind die Durchbrüche 12 quer zu den Strom-Sammelschienen-Abschnitten 20 aufeinander ausgerichtet. Die Aussparungen 13 verbinden die Längsseite 16 mit der zugekehrten Reihe von Durchbrüchen 12, während die Aussparungen 15 die Längsseite 17 mit der zugekehrten Reihe von Durchbrüchen 12 verbinden. Die Aussparungen 14 verbinden die Durchbrüche 12 der beiden Reihen. Auf diese Weise dienen die Aussparungen 13, 14 und 15 als Kabelkanäle, in denen Anschluß- und Verbindungsleitungen in der vorgegebenen Teilung der Durchbrüche 12 in den Reihen geschützt durch die Trägerplatte 10 zu den auf den Klemmschenkeln 23 der Strom-Sammelschienen-Abschnitte 20 festgelegten elektrischen Geräte geführt werden können. Die Trägerplatte 10 trägt im Randbereich der Längsseiten 16 und 17 Befestigungsaufnahmen 30 für Befestigungsschrauben.

Der Halter mit der Trägerplatte 10 und den in die Aufnahmen 11 eingesetzten Strom-Sammelschienen-Abschnitten 20 bildet eine vorgefertigte Einheit. Mehrere derartige Halter können zu einem Sammelschienensystem aneinandergereiht werden. Dabei müssen die aufeinanderstoßenden Enden der Strom-Sammelschienen-Abschnitte 20 elektrisch leitend miteinander verbunden werden. Dabei werden in den Haltern Strom-Sammelschienen-Abschnitte 20 gleichen Querschnitts verwendet. Sind die Klemmschenkel 23 aller Strom-Sammelschienen-Abschnitte 20 zur Längsseite 17 der Trägerplatte 10 gerichtet, dann haben die Klemmschenkel 23 denselben mittleren Abstand wie die Aufnahmen 11 in der Trägerplatte 10, der auf die Kontaktbügel oder Federkontakte der aufgesetzten elektrischen Geräte abgestimmt ist.

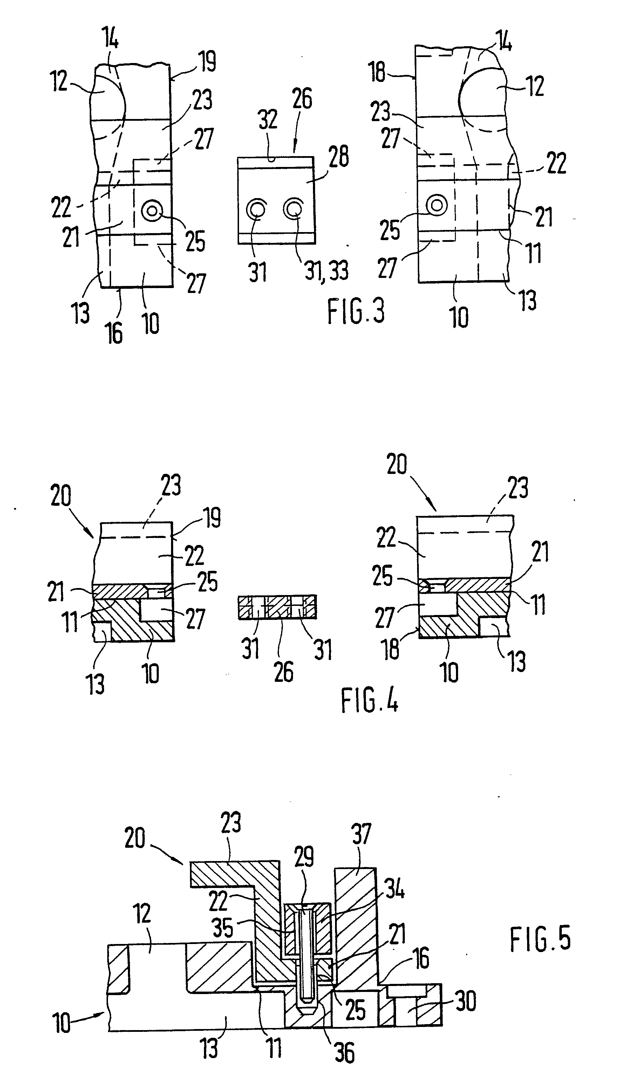

In den den Schmalseiten 18 und 19 der Trägerplatte 10 zugekehrten Endabschnitten sind in den Nutgrund der nutförmigen Aufnahmen 11 Erweiterungen 27 eingebracht, die ein einstückiges plattenförmiges Verbinderelement 26 zur Hälfte aufnehmen, wie der Schnitt nach Fig. 4 zeigt. Die Breite, die Tiefe und die Höhe dieser Erweiterungen 27 entsprechen der Breite, der halben Länge und der Dicke des elektrisch leitenden Verbinderelements 26. Über den Erweiterungen 27 tragen die Strom-Sammelschienen-Abschnitte 20 Befestigungsaufnahmen 25 für Befestigungsschrauben 29, die in Gewindeaufnahmen 31 der Verbinderelemente 26 eingeschraubt werden. Auf diese Weise können die Trägerplatten 10 von aneinandergereihten Haltern ohne Trennfuge aneinander anschließen und die Verbinderelemente 26 schalten unterhalb der Befestigungsschenkel 21 die Strom-Sammelschienen-Abschnitte 20 elektrisch leitend durch. Dabei wird die volle Breite der Befestigungsschenkel 21 als Kontaktfläche ausgenützt, wenn sich die Erweiterungen 27 und die Verbinderelemente 26 über die gesamte Breite der Befestigungsschenkel 21 der Strom-Sammelschienen-Abschnitte 20 erstrecken.

Wie die Ansicht nach Fig. 3 zeigt, kann die Durchschaltung auch mittels zweiteiliger Verbinderelemente vorgenommen werden. Wie Fig. 2 erkennen läßt, erstrecken sich die Kontaktplatten 28 aus leitendem Material über die gesamte Breite der Befestigungsschenkel 21 der Strom-Sammelschienen-Abschnitte 20, während die im Querschnitt U-förmigen Isolierplatten 26 mit ihren Seitenschenkeln 32 die Längsseiten der Kontaktplatten 28 isolierend überdecken. Die Erweiterungen 27 haben daher eine Breite, die größer ist als die Breite der Befestigungsschenkel 21 der Strom-Sammelschienen-Abschnitte 20. Die Kontaktplatten 28 haben über den Gewindeaufnahmen 31 der Isolierplatten 26 Durchgangsbohrungen 33 für die Befestigungsschrauben 29, die wieder in die Befestigungsaufnahmen 25 der Strom-Sammelschienen-Abschnitte 20 eingeführt werden.

Wie Fig. 5 zeigt, können die Verbinderelemente 34 auch über den Befestigungsschrauben 21 der Strom-Sammelschienen-Abschnitte 20 angeordnet werden. Die Aufnahmen 11 haben dann über die gesamte Länge der Trägerplatte 10 denselben Querschnitt. Die Befestigungsaufnahmen 25 in den Endabschnitten der Strom-Sammelschienen-Abschnitte 20 nehmen die Befestigungsschrauben 29 auf, die vorher aber durch die Durchgangsbohrungen 35 der Verbinderelemente 34 geführt sind und durch die Aufnahmen 25 hindurch in die Gewindeaufnahmen 36 eingeschraubt sind, welche in die Trägerplatte 10 unterhalb der Aufnahmen 25 eingebracht sind bzw. beim Einschrauben selbstschneidender Befestigungsschrauben 29 eingebracht werden. Die Verbinderelemente 34 überdecken in der Breite die Befestigungsschenkel 21 der Strom-Sammelschienen-Abschnitte 20, wobei Trenn- oder Abschlußstege 37 der Trägerplatte 10 eine Begrenzung darstellen und die Strom-Sammelschienen-Abschnitte bis zu den Klemmschenkeln 23 hoch gegeneinander isolieren.

## Ansprüche

1. Sammelschienensystem mit Haltern, die in ihrer Oberseite mehrere Aufnahmen für im Abstand und parallel zueinander verlaufende Strom-Sammelschienen-Abschnitte aufweisen, die in diesen Aufnahmen festgelegt sind,
dadurch gekennzeichnet,
daß die Halter als rechteckförmige Trägerplatten (10) ausgebildet sind, die mit ihren Längsseiten (16,17) parallel zu den Strom-Sammelschienen-Abschnitten (20) ausgerichtet sind,
daß die Strom-Sammelschienen-Abschnitte (20) bündig mit den Schmalseiten (18,19) der Trägerplatte (10) abschließen,
daß an den Schmalseiten (18,19) der Trägerplatte (10) die zugekehrten Endabschnitten der Aufnahmen (11) und/oder die Strom-Sammelschienen-Abschnitte (20) in Längsrichtung der Strom-Sammelschienen-Abschnitte (20) ausgerichtete Verbinderelemente (26,28,34) zur Hälfte aufnehmen, und
daß diese Verbinderelemente (26,28,34) bei der Aneinanderreihung der Halter mit den aufeinanderstoßenden Enden der Strom-Sammelschienen-Abschnitte (20) elektrisch leitend verbindbar sind.

2. Sammelschienensystem nach Anspruch 1, dadurch gekennzeichnet,
daß die Aufnahmen (11) für die Strom-Sammelschienen-Abschnitte (20) nutförmig ausgebildet sind und daß in den Endabschnitten der Aufnahmen (11) in den Nutgrund Erweiterungen (27) für die Verbinderelemente (26,28) eingebracht sind.

3. Sammelschienensystem nach Anspruch 2, dadurch gekennzeichnet, daß die Erweiterungen (27) in der Breite, Tiefe und Höhe auf die Breite, die halbe Länge und die Dicke der plattenförmig ausgebildeten Verbinderelemente (26, Fig. 4) abgestimmt sind.

4. Sammelschienensystem nach einem der Ansprüche 1 bis 3, dadurch gekennzeichnet, daß die Strom-Sammelschienen-Abschnitte (20) über den Erweiterungen (27) mit einer Befestigungsaufnahme (25) für eine Befestigungsschraube (29) versehen sind und daß diese Befestigungsschrauben (29) in Gewindeaufnahmen (31) der Verbinderelemente (26) einschraubbar sind.

5. Sammelschienensystem nach Anspruch 1, dadurch gekennzeichnet, daß die Strom-Sammelschienen-Abschnitte (20) mit einem Befestigungsschenkel (21) in die Aufnahmen (11) der Trägerplatte (10) eingeführt und mittels Schrauben (24) mit dieser verbunden sind, wobei die Schrauben (24) in Längsrichtung der Strom-Sammelschienen-Abschnitte (20) in gleichmäßigen Abständen zueinander angeordnet und quer zu den Strom-Sammelschienen-Abschnitten (20) aufeinander ausgerichtet sind.

6. Sammelschienensystem nach einem der Ansprüche 1 bis 5, dadurch gekennzeichnet, daß die Breite der Erweiterungen (27) der Breite der Befestigungsschenkel (21) der Strom-Sammelschienen-Abschnitte (20) und der Verbinderelemente (26) entspricht.

7. Sammelschienensystem nach einem der Ansprüche 1 bis 6, dadurch gekennzeichnet, daß die Verbinderelemente (26) aus elektrisch leitendem Material bestehen.

8. Sammelschienensystem nach einem der Ansprüche 1 bis 6, dadurch gekennzeichnet, daß die Verbinderelemente (26,28) aus einem Isolierträger und einer Kontaktplatte zusammengesetzt sind, wobei die Gewindeaufnahmen (31) in die Isolierträger eingebracht und die Kontaktplatten mit fluchtenden Durchgangsbohrungen (33) versehen sind.

9. Sammelschienensystem nach Anspruch 8, dadurch gekennzeichnet, daß die Isolierträger die parallel zu den Strom-Sammelschienen-Abschnitten (20) verlaufenden Seitenwände der Kontaktplatten abdecken.

10. Sammelschienensystem nach Anspruch 1 und 5, dadurch gekennzeichnet, daß die Verbinderelemente (34) über den Befestigungsschenkeln (21) der Strom-Sammelschienen-Abschnitte (20) angeordnet und mit den Befestigungsschenkeln (21) elektrisch leitend verbindbar sind.

11. Sammelschienensystem nach Anspruch 10, dadurch gekennzeichnet, daß die Befestigungsschenkel (21) in den Endabschnitten der Aufnahmen (11) mit Befestigungsaufnahmen (25) für eine Befestigungsschraube (29) versehen sind und daß die Befestigungsschrauben (29) in Durchgangsbohrungen (35) der Verbinderelemente (34) und in die Befestigungsaufnahmen (25) der Befestigungsschenkel (21) der Strom-Sammelschienen-Abschnitte (20) eingeführt und mit Gewindeaufnahmen (36) der Trägerplatte (10) des Halters verschraubbar sind.

12. Sammelschienensystem nach einem der Ansprüche 1 bis 11, dadurch gekennzeichnet, daß die Strom-Sammelschienen-Abschnitte (20) Z-förmig ausgebildet sind, wobei ein Querschenkel als Befestigungsschenkel (21) dient und der andere Querschenkel als Klemmschenkel (23) im Abstand und parallel zur Oberseite der Trägerplatte (10) verläuft.

13. Sammelschienensystem nach einem der Ansprüche 1 bis 12, dadurch gekennzeichnet, daß die Trägerplatte (10) zumindest zwischen benachbarten Strom-Sammelschienen-Abschnitten (20) mit Reihen von Durchbrüchen (12) versehen sind, die in Kabelkanäle einmünden, die als Aussparungen (13,14,15) in die Unterseite eingebracht sind und die die quer zu den Strom-Sammelschienen-Abschnitten (20) ausgerichteten Durchbrüche (12) untereinander und mit den Längsseiten (16,17) der Trägerplatte (10) verbinden.

FIG.1

FIG.2

EP 0 336 293 A1

FIG.3

FIG.4

FIG.5

A 7063

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | DE-U-7115411 (HOFFMEISTER-LEUCHTEN KG) <br> * Seite 8, letzter Absatz - Seite 10, Absatz 1; Figuren 1-6 * <br> ---- | 1, 7-9 | H02G5/04 <br> H01R25/14 |
| A | GB-A-591432 (JOHN B. PIERCE FOUNDATION) <br> * Seite 3, Zeile 127 - Seite 4, Zeile 41; Figuren 5-7 * <br> ---- | 1, 4, 5, 11 | |
| A | DE-A-2524764 (B.B.C. AG) <br> * Seite 8, Zeile L - Seite 9, Zeile 1; Figur 3 * <br> ----- | 1 | |

RECHERCHIERTE
SACHGEBIETE (Int. Cl.4 )

H02G
H01R
H02B
B60M

Der vorliegende Recherchenbericht wurde für alle Patentansprüche erstellt

| Recherchenort | Abschlußdatum der Recherche | Prüfer |
|---|---|---|
| DEN HAAG | 10 JULI 1989 | WOODALL C.G. |